Europäisches Patentamt

(19) European Patent Office

Office européen des brevets

(11) Veröffentlichungsnummer: **0 309 474**
**B1**

(12) **EUROPÄISCHE PATENTSCHRIFT**

(45) Veröffentlichungstag der Patentschrift: **31.10.90**

(51) Int. Cl.⁵: **C 02 F 3/20,** C 02 F 3/06

(21) Anmeldenummer: **87904022.8**

(22) Anmeldetag: **12.06.87**

(86) Internationale Anmeldenummer:
**PCT/DE87/00273**

(87) Internationale Veröffentlichungsnummer:
**WO 87/07590 17.12.87 Gazette 87/28**

(54) **VERFAHREN UND VORRICHTUNG ZUM GROSSFLÄCHIGEN, FEINBLASIGEN BEGASEN VON FLÜSSIGKEITEN.**

(30) Priorität: **12.06.86 DE 3619757**
**14.08.86 DE 3627665**

(43) Veröffentlichungstag der Anmeldung:
**05.04.89 Patentblatt 89/14**

(45) Bekanntmachung des Hinweises auf die
Patenterteilung:
**31.10.90 Patentblatt 90/44**

(84) Benannte Vertragsstaaten:
**AT BE CH DE FR GB IT LI NL SE**

(56) Entgegenhaltungen:
**DE-A-1 708 586**
**US-A-3 234 123**
**US-A-3 677 936**

**Gas und Wasserfach - Wasser/Abwasser, Band 124, Heft 5, 1983, Oldenburg Verlag, (München DE), M. Hirose: "Ein neues System einer Kombination des Belebungsverfahrems mit sessilen Organismen auf Aufwuchsflächen", Seiten 239-242**

(73) Patentinhaber: **ENGELBART, Wilke**
**Welsburg**
**D-2879 Brettorf (DE)**

(72) Erfinder: **ENGELBART, Wilke**
**Welsburg**
**D-2879 Brettorf (DE)**

(74) Vertreter: **Ninnemann, Detlef, Dipl.-Ing.**
**Patentanwälte Maikowski & Ninnemann**
**Xantener Strasse 10**
**D-1000 Berlin 15 (DE)**

**Beschreibung**

Gegenstand der Erfindung ist ein Verfahren sowie eine Vorrichtung zum großflächigen, feinblasigen Begasen von Flüssigkeiten mit einer porösen oder perforierten, stützkörperfreien, elastischen Membran, der ein Gas zugeführt wird, das durch die Membran aus- und in die Flüssigkeit eintritt, wobei die Membran an zumindest zwei gegenüberliegenden Seiten in Haltevorrichtungen eingespannt wird.

Ein Verfahren und eine Vorrichtung der genannten Art ist aus der US—A—3 234 123 bekannt. Die bekannte Vorrichtung zur Belüftung von Abwasser weist mehrere perforierte, elastische schlauchförmige Membrane auf, die innerhalb eines Beckens verlegt und mittels Spiralfedern am Beckenrand befestigt sind. Über eine gemeinsame Versorgungsleitung werden die schlauchförmigen Membranen mit Druckluft versorgt, wobei durch Erhöhung des Gasdruckes die eingespannten Schläuche stärker aufgebläht und in geringem Umfange auch in Längsrichtung gedehnt werden. Zur Lagefixierung sind die in dem Becken verlegten Schläuche mittels Bleidrähte beschwert, die auf der Unterseite des Schlauches in den Schlauch eingenäht sind.

Aus der DE—C—29 42 607 ist ebenfalls ein eingangs genanntes Verfahren sowie eine Vorrichtung bekannt, bei der eine gelochte Luftverteilerfolie mit ihren Rändern in einen geschlossenen Rahmen eingespannt und über einer ebenfalls in den Rahmen eingespannten ungelochten Folie angeordnet ist, so daß die gelochte Luftverteilerfolie bei fehlender oder geringer Luftzufuhr auf der ungelochten Folie satt aufliegt. Sowohl unterhalb der ungelochten Folie als auch oberhalb der gelochten Luftverteilerfolie sind versetzt zueinander Stege zwischen den Rahmenseiten angeordnet, die den Folien Stabilität verleihen. Zusätzlich kann die gelochte Luftverteilerfolie an ihrer der ungelochten Folie zugewandten Innenseite mit einer glasfaserverstärkten Kunststoffschicht als Stützkörper versehen werden, die der gelochten Luftverteilerfolie eine besondere Steifigkeit verleiht, so daß ein stärkeres Aufwölben der gelochten Luftverteilerfolie durch den Luftdruck auch zwischen den oberhalb der ungelochten Folie angeordneten Stegen vermieden wird.

Bei einem üblichen Einsatz der bekannten Vorrichtung zum feinblasigen Belüften von Wasser in Belebungsbecken von biologischen Kläranlagen oder zur Sauerstoffzufuhr in Fischzuchtteichen oder dergleichen treten jedoch Probleme hinsichtlich einer gleichmäßigen Gasverteilung und eines Verstopfens der Perforationslöcher von der Flüssigkeitsseite her auf. Eine gleichmäßige Gasverteilung hängt sowohl von der Größe der einzelnen Durchtrittsöffnungen als auch dem Differenzdruck zwischen dem Inneren und Äußeren der Luftverteilerfolie ab. Durch den Staubgehalt der verwendeten Druckgase, in besonderem Maße jedoch durch Verstopfung der Durchtrittsöffnungen von der Flüssigkeitsseite her im Dauerbetrieb, treten bei dieser und anderen bekannten Vorrichtungen unvermeidliche Beeinträchtigungen auf, die im Laufe der Zeit ein ungleichmäßiges Blasenbild und/oder einen erhöhten Druckverlust ergeben.

Eine Beseitigung der unvermeidlichen Verstopfungen während des Betriebes gelingt bei den bekannten Vorrichtungen nur unvollständig, so daß stets eine Erhöhung des Druckverlustes ein ungleichmäßiges Blasenbild, oder eine zumindest teilweise Unterbrechung des Betriebsablaufes zum Entfernen und Reinigen der Vorrichtung in Kauf genommen werden muß.

Bei einer feinblasigen Verteilung des Gases in der betreffenden Flüssigkeit ist zusätzlich eine möglichst gleichmäßige Gasverteilung in Bezug auf die Grundfläche des Flüssigkeitsbehälters oder Teilen davon erwünscht. Werden zu diesem Zweck Belüfterrohre, — platten oder — schläuche im Abstand von einigen Dezimetern zueinander angebracht, so entsteht im Betrieb über den Begasungsstellen eine oft unerwünscht schnelle Aufwärtsströmung des Flüssigkeits-Gasblasengemisches, die eine Reduzierung der Aufenthaltszeit des Gases in der Flüssigkeit ergibt und damit, z.B. beim Eintrag von Sauerstoff aus Luft in Wasser, eine starke Verminderung des Wirkungsgrades zur Folge hat. Je höher die spezifische Beaufschlagung des Belüfters mit Gas ist, desto geringer wird der Wirkungsgrad bei der Auflösung des Gases in der betreffenden Flüssigkeit.

Aus der DE—A—33 18 412 ist eine Vorrichtung zum Einbringen eines Gases in eine Flüssigkeit, insbesondere in ein zu behandelndes Abwasser bekannt, bei dem gummielastische, schlauchförmige Membranen verwendet werden, deren Wandungen Perforationen aufweisen, durch die das zugeführte Gas von innen nach außen hindurchtritt und blasenförmig in die umgebende Flüssigkeit gelangt. Die in den Wandungen der Membranen vorgesehenen Perforationen bestehen dabei aus zu der Längsachse der Membranen angeordneten Querschlitzen. Die schlauchförmigen Membranen werden auf Stützkörpern angebracht.

Aus der DE—A—27 57 255 ist ein Verfahren zum feinen Verteilen von flüssigen Stoffen in Gasen und/oder von Gasen in Flüssigkeiten bekannt, bei dem der fein zu verteilende Stoff unter Überdruck durch ein einseitig geschlossenes, perforiertes Stützrohr geführt wird und von dort an flexible Lochscheiben abgegeben wird, die auf dem Umfang des perforierten Stützrohres vorgesehen sind.

Aus der DE—A—32 18 460 ist es bekannt, zum feinblasigen Belüften von Wasser schlauchartige, perforierte Folien auf einem biegsamen Stützrohr anzubringen, wobei das Stützrohr oder der Gummimantel im Bereich der Biegungen ohne Perforationen ausgeführt wird.

Nachteilig ist es bei diesen bekannten Vorrichtungen, daß die feinen Perforationen im Dauerbetrieb von außen her mit Stoffen aus der umgebenden Flüssigkeit verstopft werden. Aufgrund des damit verbundenen Anstiegs des Druckverlustes, d.h. der Erhöhung des Differenzdruckes, der für den Durchtritt des Gases durch die Perforationen erforderlich ist, müssen von Zeit zu Zeit mit Hilfe von größeren Gasdurchsätzen, d.h. unter Anstieg des Innendruckes oder mit Hilfe von anstelle des Gases verwendeten Flüssigkeiten die Perforationen wieder freigespült werden. Bei besonders fein perforierten Belüftungsvorrichtungen ist zum Zwecke des Freispülens zusätzlich ein Ausbauen der gesamten Folien bzw. Belüftungsschläuche erforderlich.

Bei allen, auf Stützkörpern angebrachten membranartigen Begasungsvorrichtungen fällt als Nachteil ins Gewicht, daß die Stützkörper eine weitgehende Formveränderung, z.B. beim Aufheben des Innendruckes verhindern.

Ein weiterer Nachteil der bekannten Vorrichtungen besteht darin, daß infolge der konstruktiven Ausgestaltung der Vorrichtungen zum Begasen von Flüssigkeiten jeweils nur begrenzte Flächen eines Behälterbodens belegt werden können, da einerseits die Halterungsvorrichtungen erheblichen Platz beanspruchen und somit ein dichtes Aneinanderlegen der einzelnen Begasungsvorrichtungen verhindern und andererseits infolge der erheblichen Druckverluste stets nur begrenzte Längen der Begasungsvorrichtungen vorgesehen werden können bzw. in bestimmten Abständen zueinander Zuführschläuche vorgesehen werden müssen, die Druckgas in die Vorrichtungen zum Begasen von Flüssigkeiten einspeisen.

Aufgabe der vorliegenden Erfindung ist es, ein Verfahren und eine Vorrichtung zum großflächigen, feinblasigen Begasen von Flüssigkeiten der eingangs genannten Art anzugeben, die im Betrieb einen geringen Druckverlust und ein gleichmäßiges, feinblasiges Begasen der Flüssigkeiten sicherstellen, ein Beseitigen eventueller Verstopfungen im Betrieb ohne nennenswerte Betriebsunterbrechung und ohne Anwendung eines wesentlich erhöhten Innendruckes sowie ein Belegen beliebig großer Flächen eines Behälterbodens ermöglichen.

Diese Aufgabe wird erfindungsgemäß dadurch gelöst, daß die Membran an zumindest zwei gegenüberliegenden Seiten in Haltevorrichtungen eingespannt wird, daß die Membran mit Hilfe dieser Haltevorrichtungen durch Umlenkeinrichtungen und Führungsvorrichtungen, die in einem Flüssigkeitsbehälter angebracht sind und die eine horizontale Ausrichtung der Membran gewährleisten, gezogen wird, und daß durch Veränderung der Zugkraft an zumindest einer Haltevorrichtung die Lage und/oder der Dehnungszustand der Membran in einer Längsrichtung verändert wird.

Die erfindungsgemäße Lösung stellt im Betrieb einen geringen Druckverlust und eine gleichmäßige, feinblasige Begasung der Flüssigkeit sicher und ermöglicht ein Beseitigen eventueller Verstopfungen während des Betriebes ohne nennenswerte Betriebsunterbrechungen und ohne Anwendung eines erhöhten Gasdruckes und damit eine unzureichende Begasung von der betreffenden Flüssigkeit und erlaubt ein dichtes Aneinanderlegen der einzelnen Vorrichtungen, so daß beliebig große Flächen eines Behälterbodens belegt werden können.

Dabei kann die elastische Membran im Betriebszustand wahlweise gedehnt oder entspannt sein, so daß sie zum Reinigen der Perforationen von Ablagerungen, Verstopfungen o.dgl. entgegengesetzt gespannt oder entlastet wird. Die Entlastung und Dehnung der elastischen Membran kann entweder bei unveränderter Einspannung der elastischen Membran durch veränderte Gaszufuhr oder bei konstanter Gaszufuhr durch Ausüben einer Zugkraft auf die elastische Membran an den Einspannstellen hergestellt werden. Eine Kombination beider Maßnahmen zur Herstellung des Dehnzustandes ist ebenfalls möglich.

Eine vorteilhafte Ausgestaltung der erfindungsgemäßen Lösung ist dadurch gekennzeichnet, daß die schlauchförmige elastische Membran in Längsrichtung um einen vorbestimmten, festen Betrag, vorzugsweise um 15% bis 25%, gegenüber ihren Abmessungen im Ruhezustand gedehnt wird. Durch diese Maßnahmen wird der erforderliche Druckverlust für eine gleichmäßige Blasenverteilung sehr stark gesenkt.

Gemäß einer weiteren Ausgestaltung der erfindungsgemäßen Lösung kann bei besonders schwerwiegenden Verstopfungen der Perforationen zusätzlich die Druckgaszufuhr kurz unterbrochen werden, anschließend der Dehnungszustand aufgehoben und das Gas aus dem Inneren der elastischen Membran abgelassen werden, so daß die elastischen Membranen durch den Außendruck der Flüssigkeit zusammengepreßt werden. Anschließend wird erneut Druckgas zugeführt und die elastische Membran in den gedehnten Betriebszustand gebracht. Dadurch können selbst hartnäckigste Verstopfungen und Verkrustungen der Perforationen bzw. porösen Wandungen der elastischen Membran beseitigt werden.

Da üblicherweise eine Vielzahl Einzelbegasungsaggregate nebeneinander gleichzeitig in Betrieb genommen wird, fällt die kurze Unterbrechung eines einzelnen Begasungsaggregates bei dessen Regenerierung praktisch nicht ins Gewicht. Um die Reinigungsarbeit in Großanlagen zu erleichtern, können die einzelnen Begasungsvorrichtungen abwechselnd an zwei Hauptleitungen für die Druckgaszufuhr angeschlossen werden, so daß beim Schließen einer Hauptleitung jeweils die Hälfte der Aggregate weiter in Betrieb bleibt.

Ein weiterer Vorteil der erfindungsgemäßen Lösung besteht darin, daß im Gegensatz zu bekannten Begasungsvorrichtungen, die maximale Längenabmessungen von 1 bis 6 Meter für ein Einzelaggregat zulassen, da bei noch größeren Abmessungen keine gleichmäßige Gasverteilung mehr gewährleistet ist, bei Anwendung des erfindungsgemäßen Verfahrens ein Einzelaggregat mehrere hundert Meter lang sein kann, ohne daß eine ungleichmäßige Gasverteilung befürchtet werden muß. Dadurch kann die Druckgaszufuhr nur von einer Stirnseite eines Behälters her erfolgen und muß nicht aus vielen einzelnen, über den gesamten Flüssigkeitsbehälter verteilten Zulaufleitungen bestehen.

Durch die Anordnung eines Wirbels zwischen der Spannvorrichtung und der schlauchförmigen elastischen Membran kann selbst bei großen Längen der schlauchförmigen Membran und einem nicht korrekten Auslegen der schlauchförmigen elastischen Membran gewährleistet werden, daß beim Durchziehen der schlauchförmigen elastischen Membran durch die Abspannvorrichtung kein Verknoten und damit eine Unterbrechung der Gaszufuhr zur elastischen Membran auftritt.

Die erfindungsgemäße Lösung ermöglicht weiterhin, daß durch lückenloses Nebeneinanderlegen von Einzelmembranen bzw. Belüfterschläuchen eine Behältergrundfläche vollständig und praktisch lückenlos begast werden kann. Eine solche Begasungsform hat sich in vielen Fällen als vorteilhaft und notwendig erwiesen, besonders dann, wenn über der Begasungseinrichtung sogenannte statische Mischer angebracht werden sollen. Wird nämlich ein Teil der von diesen statischen Mischern gebildeten Zwischenräume von unten her nicht von Blasen durchströmt, so hat es sich in der Praxis als unvermeidbar erwiesen, daß die unbegasten Zwischenräume mit Feststoffen aus der Flüssigkeit verstopfen. So entstehen beispielsweise bei der aeroben, biologischen Abwasserreinigung in solchen Zwischenräumen anaerobe Zonen, in denen Giftstoffe gebildet werden können, die den Betrieb ganz erheblich stören können oder z.B. die Gesundheit von Fischen beeinträchtigen.

Bei einer Kombination von statischen Mischern mit der erfindungsgemäßen Vorrichtung zum feinblasigen Begasen von Flüssigkeiten hat es sich als besonders zweckmäßig erwiesen, daß als Tragvorrichtung für die Mischer z.B. Flacheisen über die gesamte Beckenlänge am Boden oder darüber vertikal angebracht werden, die zugleich als führung für die einzelnen Begasungsaggregate dienen, wobei in den Membranen der Begasungsaggregate so viele Perforationensstellen vorhanden sind, daß unter jeder der Kammern, die von den Mischern gebildet werden, mindestens eine Perforationsstelle ist. Eine derartige Kombination aus feinblasiger Begasung in Verbindung mit statischen Mischern gestattet es, daß der Betrieb eines Aggregates kurzfristig unterbrochen werden kann, ohne daß der Gesamtbetrieb wesentlich gestört wird, was für die kontinuierliche Aufrechterhaltung der Strömungsverhältnisse im statischen Mischer von wesentlicher Bedeutung ist, da z.B. bei der aeroben biologischen Abwasserreinigung eine kurzfristige Änderung des Betriebszustandes drastische Änderungen im biologischen Rasen, der sich auf den Flächen des statischen Mischers bildet, zur Folge hat.

Anhand von in der Zeichnung dargestellten Ausführungsbeispielen soll der der Erfindung zugrundeliegende Gedanke näher erläutert werden. Es zeigen:

Figur 1 einen schematischen Querschnitt durch eine Vorrichtung zum feinblasigen Begasen von Flüssigkeiten, die in einem Flüssigkeitsbehälter angeordnet ist;

Figur 2 eine vergrößerte Darstellung der Führungsvorrichtung eines Begasungsschlauches;

Figur 3 einen Schnitt durch die Anordnung gemäß Figur 2 bei der Führung eines einzelnen Begasungsschlauches sowie zweier nebeneinander angeordneter Begasungsschläuche;

Figur 4 vergrößerte Darstellungen von Einzelteilen der Vorrichtung gemäß den Figuren 1 bis 3;

Figur 5 eine Draufsicht auf einen Behälter mit mehreren parallel zueinander angeordneten Begasungsschläuchen, die von Abspannseilen gehalten werden;

Figur 6 vergrößerte Darstellungen von Einzelteilen der Vorrichtung gemäß Figur 5;

Figur 7 einen Querschnitt durch ein Becken für eine Fischzuchtanlage und

Figur 8 eine perspektivische Ansicht eines im Tiefteil eines Beckens oder auf einem flachen Beckenboden anbringbaren Containers.

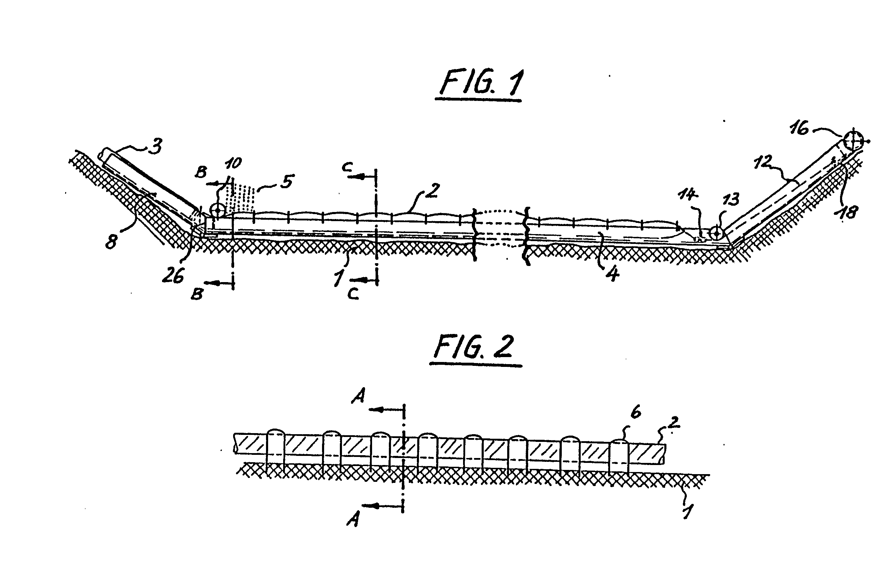

Zur Erläuterung der Funktion der Vorrichtung zum feinblasigen Begasen von Flüssigkeiten ist in Figur 1 ein Querschnitt durch einen Flüssigkeitsbehälter dargestellt, wobei mit der Bezugsziffer 1 der Behälterboden und mit der Bezugsziffer 11 die Behälterwand bezeichnet ist, die im Falle eines Teiches als Flüssigkeitsbehälter aus einer Teichböschung bestehen kann. Angenähert parallel zum Behälterboden 1 und in geringem Abstand vom Behälterboden erstreckt sich ein Belüftungsschlauch 2 über nahezu die gesamte Länge oder Breite des Behälterbodens 1, wobei der Belüftungsschlauch 2 in einer Führungsschiene 4, beispielsweise einer U-förmigen Schiene verlegt ist. An der Führungsschiene 4 sind Bügel 6 angebracht, die beispielsweise aus gebogenen Rundeisen bestehen können und einen Abstand zueinander von ca. 0,2 bis 1 m aufweisen und ein Aufschwimmen des Belüftungsschlauches 2 verhindern und seine horizontale Ausrichtung gewährleisten.

Im Bereich der Behälterwand 11 ist eine Führungsschiene 8 angeordnet, die mit der Führungsschiene 4 verbunden ist. Zusätzlich sind an beiden Enden der Führungsschiene 4 Rollen 10 und 13 angebracht, durch die der Belüftungsschlauch 2 bzw. Spannseile 12 über eine vordere Haltevorrichtung, im dargestellten Ausführungsbeispiel einen Wirbel 14 gezogen werden. Das Spannseil 12 kann wahlweise durch nicht näher dargestellte Zugseile verlängert werden, die mittels einer Kurbel 16 aufgerollt werden. Das Spannseil 12 weist an seinem Ende eine Öse auf, die in einen an der Behälterwand angebrachten Haken 18 eingehängt werden kann.

Die hintere Haltevorrichtung 26 des perforierten, elastischen Belüftungsschlauches 2 ist mit einem Zuführungsschlauch 3 verbunden, über den im dargestellten Ausführungsbeispiel Druckluft als Gas zugeführt wird.

Infolge der beabstandeten Anordnung von den an der Führungsschiene 4 befestigten Bügeln 6 wölbt sich die Oberfläche des Belüftungsschlauches 2 bei Zufuhr von Druckluft über den Zufuhrschlauch 3 kissenartig und es treten an den Perforationsstellen Luftblasen 5 aus dem Belüftungsschlauch 2 aus und führen zu einer feinblasigen Belüftung des im Flüssigkeitsbehälter befindlichen Wassers.

Im Betriebszustand ist der Belüftungsschlauch 2 mittels des Spannseiles 12 so vorgespannt, daß die aus dem Belüftungsschlauch 2 austretenden Luftblasen 5 ein gleichmäßiges Bild ergeben und somit zu einer gleichmäßigen Belüftung des in dem Flüssigkeitsbehälter befindlichen Wassers führen. Die Dehnung des Belüftungsschlauches 2 im Betriebszustand beträgt vorzugsweise 15% bis 25% seiner Ruhelänge, so daß auf den Belüftungsschlauch 2 eine verhältnismäßig geringe Spannung ausgeübt wird. Bei nachlassender Spannung bzw. Dehnung des Belüftungsschlauches 2 kann das Spannseil 12 nachgespannt werden, so daß der gewünschte Dehnungszustand des Belüftungsschlauches 2 eingehalten wird.

Treten infolge von Verunreinigungen in der über den Zufuhrschlauch 3 zugeführten Druckluft bzw. infoge von in der Flüssigkeit befindlichen Stoffen Verstopfungen der Perforationen im Belüftungsschlauch 2 oder ein infolge Zuwachsens der perforationen zunehmender Druckverlust auf, so wird entweder der Dehnungszustand des Belüftungsschlauches 2 durch Lösen des Spannseiles 12 aufgehoben und der Belüftungsschlauch 2 in seine Ruhezustandslänge überführt oder eine verstärkte Dehnung des Belüftungsschlauches 2 durch Anspannen des Spannseiles bzw. durch verstärkte Druckgaszufuhr vorgenommen. Bei einem Aufheben des Dehnungszustandes werden infolge des gleichzeitig einsetzenden Schrumpfungsvorganges die Verunreinigungen an den Perrorationsstellen des Belüftungsschlauches 2 gelöst bzw. abgesprengt, so daß nach kurzzeitiger Aufhebung des Dehnungszustandes erneut der Betriebszustand eingenommen werden kann, indem die Spannseile 12 wiederum gespannt werden und damit der Belüftungsschlauch 2 um den gewünschen Betrag vorgespannt wird. Während dieses Reinigungsvorganges kann die Zufuhr von Druckluft über den Zufuhrschlauch 3 unterbrochen werden.

Alternativ dazu kann bei verstärkter Dehnung des Belüftungsschlauches 2 ebenfalls ein Absprengen der Verunreinigungen herbeigeführt werden, so daß nach diesem Reinigungsvorgang erneut der normale Betriebszustand des entspannten bzw. geringfügig gedehnten Belüftungsschlauches 2 eingenommen werden kann.

Sollte aber infolge besonders hartnäckiger Verstopfungen der Perforationen des Belüftungsschlauches 2 nach dem Reinigungsvorgang sich nicht das gewünschte feinblasige Luftblasenverteilungsbild ergeben, so besteht die Möglichkeit, ohne Herausnehmen des Belüftungsschlauches 2 einen weiteren Reinigungsversuch durchzuführen.

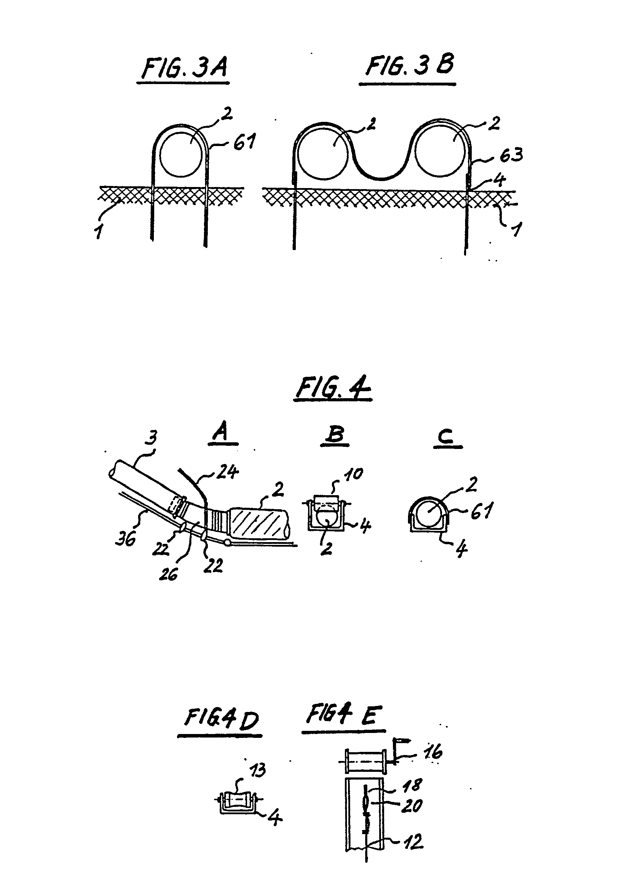

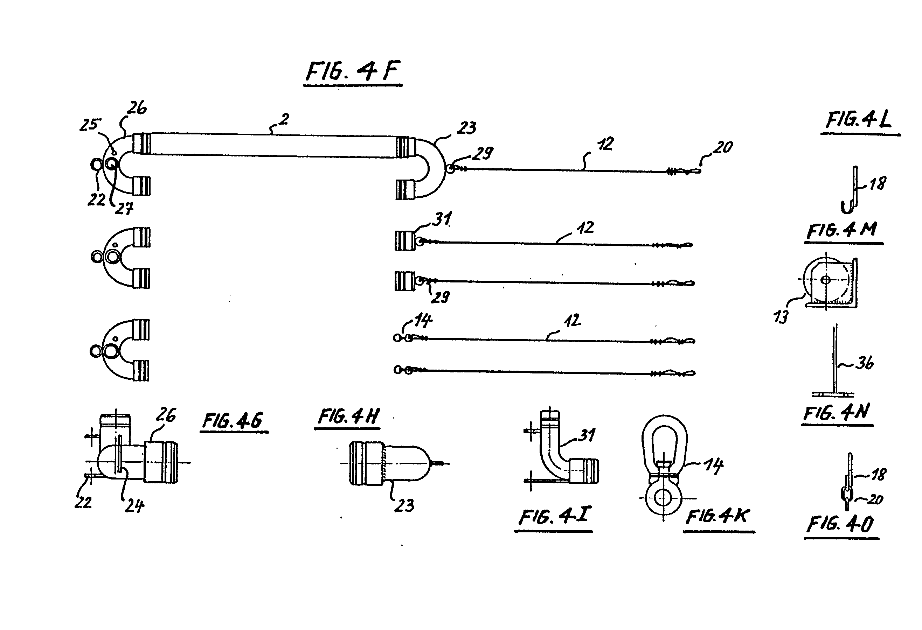

Zu diesem Zweck wird zunächst die Druckluftzufuhr zum Belüftungsschlauch 2 unterbrochen und daran anschließend kann der Dehnungszustand wie zuvor beschrieben aufgehoben werden. Über eine im Zusammenhang mit der Darstellung gemäß Figur 4A näher dargestellte Entlüftungsleitung, die zwischen dem Zuführungsschlauch 3 und dem Belüftungsschlauch 2 angeordnet sein kann oder sich am anderen Ende des Belüftungsschlauches befindet, kann die im Belüftungsschlauch 2 befindliche Druckluft aus dem Belüftungsschlauch 2 über die Entlüftungsleitung austreten, so daß der Belüftungsschlauch 2 durch den Außendruck der im Flüssigkeitsbehälter befindlichen Flüssigkeit zusammengepreßt wird. Anschließend wird die Entlüftungsleitung geschlossen und erneut Druckluft über den Zuführungsschlauch 3 dem Belüftungsschlauch 2 zugeführt. Schließlich kann durch Spannen des Spannseiles 12 erneut der Betriebs-Dehnungszustand des Belüftungsschlauches 2 hergestellt werden.

In der überwiegenden Merhzahl der Reinigungsversuche kann daran anschließend erneut ein gleichmäßiges, feinblasiges. Belüften der Flüssigkeit festgestellt werden, so daß ein Ausbauen des Belüftungsschlauches 2 überflüssig ist. Ein derartiges Ausbauen des Belüftungsschlauches 2 ist allenfalls erforderlich, wenn die Elastizität des Belüftungsschlauches nachläßt, so daß sich nicht das gewünschte feinblasige Luftverteilungsbild ergibt.

Das Ausbauen des Belüftungsschlauches 2 gestaltet sich jedoch aufgrund der konstruktiven Anordnung als besonders einfach, da der Belüftungsschlauch 2 lediglich aus der durch die Führungsschiene 4 und die Führungsbügel 6 gebildeten Führungsvorrichtung herausgezogen werden muß, wobei das ggf. verlängerte Spannseil 12 dazu dient, einen neuen oder gereinigten bzw. reparierten Belüftungsschlauch 2 wieder zwischen Führungsschiene 4 und Führungsbügel 6 einzuziehen.

Die in Figur 2 dargestellte detaillierte Ansicht eines am Behälterboden 1 geführten Belüftungsschlauches 2 zeigt die in gleichem Abstand zueinander angebrachten Führungsbügel 6, die mit dem Behälterboden 1 verbunden sind und eine Führung für den Belüftungsschlauch 2 ergeben. Wahlweise können die Führungsbügel 6 an einer Führungsschiene, vorzugsweise einer U-förmigen Schiene befestigt werden, so daß sich in Verbindung mit den Bügeln 6 ein Führungskanal für die Belüftungsschläuche 2 ergibt.

In den Figuren 3A und 3B sind zwei verschiedene Ausführungsformen der Führung der Belüftungsschläuche 2 in einem Schnitt A—A gemäß Figur 2 dargestellt.

Figur 3A zeigt die Führung eines einzelnen Belüftungsschlauches 2 mittels eines unmittelbar im Behälterboden befestigten Führungsbügels 61, während in Figur 3B jeweils zwei Belüftungsschläuche 2 mittels eines W-förmigen Bügels 63, der an einer im Behälterboden 1 befestigten Schiene 4 befestigt ist, arretiert werden.

In Figur 4 sind mehrere Einzelheiten für die Anbringung der Belüftungsschläuche 2 in dem in Figur 1 dargestellten Behälter dargestellt.

Figur 4A zeigt in vergrößertem Maßstab die Verbindung eines Belüftungsschlauches 2 mit einem Zuführungsschlauch 3. Die Verbindung wird mittels einer Haltevorrichtung 26 hergestellt, auf die einerseits der Zuführungsschlauch 3 und andererseits der perforierte, elastische Belüftungsschlauch 2 aufgesteckt und je nach Bedarf mittels zusätzlicher Befestigungsschellen befestigt werden. Die Haltevorrichtung 26 weist Führungsringe 22 auf, die über Führungs-Rundeisen 36 geführt werden. In der Haltevorrichtung 26 ist eine Entwässerungs- und Entlüftungsleitung 24 angebracht, die vorzugsweise automatische Ventile für einen eventuellen Wasserablaß aufweist.

Figur 4B zeigt eine Teilansicht B—B gemäß Figur 1 der Führung des Belüftungsschlauches 2 im Bereich der hinteren Haltevorrichtung, wobei die Führung mittels einer Führungsrolle 10 hergestellt wird, die in der U-förmigen Führungsschiene 4 gelagert ist.

Figur 4C zeigt die Anordnung des Belüftungsschlauches 2 in dem durch die U-förmige Führungsschiene 4 und einem.

Führungsbügel 61 gebildeten Führungskanal gemäß Teilansicht C—C in Figur 1.

Figur 4D zeigt in einer Einzelansicht die Ausbildung und Anordnung der Rolle 13 zum Hindurchführen des Zug- und Spannseiles 12, wobei die Rolle 13 analog zur Rolle 10 an der U-förmigen Führungsschiene 4 angebracht ist.

Figur 4E zeigt eine detaillierte Ansicht der Befestigung des Spannseiles 12 mittels einer Öse 20, die in einen Haken 18 eingehängt wird. Zum Spannen des Spannseiles 12 dient eine Kurbel 16.

Figur 4F verdeutlicht den Zusammenbau und Zusammenhang der Belüftungsschläuche 2 mit den Spannseilen 12 und den Haltevorrichtungen 26. In dem dargestellten Ausführungsbeispiel sind jeweils zwei Belüftungsschläuche 2 an eine Haltevorrichtung 26 angeschlossen, die mittels Ringe 22 an einem Führungs-Rundeisen 36 befestigt ist. Diese hintere Haltevorrichtung weist eine Entlüftung- und Entwässerungsöffnung 25 auf, an die eine entsprechende Entlüftungs- und Entwässerungsleitung angeschlossen werden kann. Über die Druckgasöffnung 27 wird dem Belüftungsschlauch 2 Gas zugeführt.

Die vordere Haltevorrichtung 23 ist mit einem Haken 27 versehen, an dem ein Spannseil 12 befestigt ist, dessen entgegengesetztes Ende eine Öse 20 aufweist.

Anstelle einer Verbindung jeweils zweier Belüftungsschläuche 2 an einer vorderen Haltevorrichtung können entsprechende Abschluß-Haltevorrichtungen 31 vorgesehen werden, die jeweils für sich Haken 29 aufweisen, an denen jeweils ein Spannseil 12 befestigt ist, das analog zu der vorstehend beschriebenen Ausführungsform am anderen Ende eine Öse aufweist, in die ein entsprechender Spannhaken eingreift. Schließlich kann anstelle der vorderen Haltevorrichtung der jeweils abgeschlossene Belüftungsschlauch über einen Wirbel 14 mit jeweils einem Spannseil 12 verbunden werden.

Die Anordnung der Wirbel 14 erweist sich sowohl bei stark bewegter Flüssigkeit als auch bei größeren Längen des Belüftungsschlauches 2 als sehr vorteilhaft. Dadurch kann beispielsweise beim Auswechseln eines Belüftungsschlauches 2 ein selbst ungeordneter Belüftungsschlauch 2 in den Führungsvorrichtungen über seine volle Länge durchgezogen werden, ohne daß Verdrehungen oder Verknotungen zuvor beseitigt werden. Wird anschließend Gas unter Druck dem Belüftungsschlauch 2 zugeführt, so tritt infolge des Wirbels 14 eine automatische Streckung des Belüftungsschlauches 2 ohne die Gefahr von Knotenbildungen und damit Behinderungen der Gasverteilung innerhalb des Belüftungsschlauches 2 auf.

Figur 4G zeigt eine Seitenansicht der in Figur 4F in Draufsicht dargestellten Haltevorrichtung 26. Diese Seitenansicht verdeutlicht die konstruktive Gestaltung der Haltevorrichtung 26 sowie die Anordnung der Entwässerungs- und Entlüftungsleitung 24 und der Ringe 22 zur Verbindung mit einem Führungs-Rundeisen.

Figur 4H zeigt eine Seitenansicht einer vorderen Haltevorrichtung 23, die jeweils zwei nebeneinanderliegende Belüftungsschläuche 2 miteinander verbindet.

Die in Figur 4I dargestellte Haltevorrichtung 31 dient zur Verbindung jeweils nur eines Belüftungsschlauches 2 mit einem entsprechenden Führungs-Rundeisen, das durch die Führungsringe 22 gesteckt wird.

Figur 4K zeigt eine detaillierte Ansicht eines Wirbels 14 zur Verbindung einer Haltevorrichtung mit einem Spannseil oder zur unmittelbaren Verbindung des geschlossenen Endes eines Belüftungsschlauches 2 mit einem Spannseil 12.

In Figur 4L bis 40 sind schließlich nähere Einzelheiten hinsichtlich der konstruktiven Ausgestaltung des Hakens 18, der die an dem einen Ende des Spannseiles gebildete Öse 20 aufnimmt, der Rolle 13 zur Aufnahme und Führung der Spannseile, des Führungs-Rundeisens 36 und der Verbindung des Hakens 18 mit der Öse 20 darstellt.

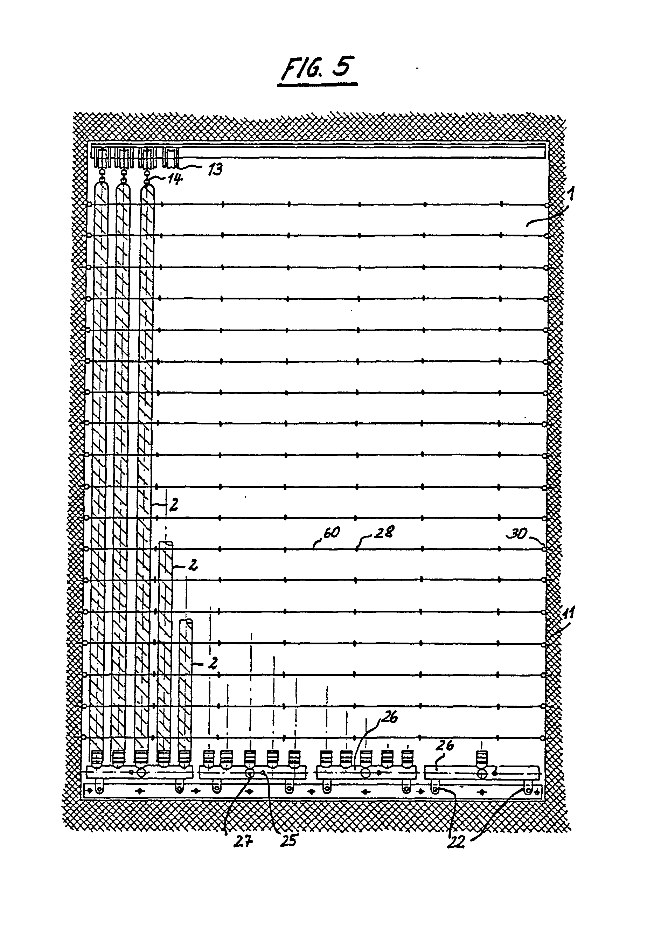

Die in Figur 5 dargestellte Draufsicht auf ein Belüftungsbecken zeigt eine Vielzahl von parallel und in gleichem Abstand zueinander geordneten Belüftungsschläuchen 2, die gleichmäßig über dem Beckenboden 1 verteilt angeordnet sind.

In dem dargestellten Ausführungsbeispiel sind jeweils fünf Belüftungsschläuche 2 an einer Haltevorrichtung 26 zusammengefaßt, wobei die einzelnen Haltevorrichtungen 26 die über einen Zuführungsschlauch zugeführte Druckluft auf die jeweils fünf Belüftungsschläuche 2 verteilen. Neben der Druckluft-Zufuhröffnung 27 ist eine Entwässerungs- und Entlüftungsöffnung 25 vorgesehen, die der Entwässerung und Entlüftung der Belüftungsschläuche 2 dienen. Die Haltevorrichtungen 26 weisen jeweils zwei Führungsringe 22 auf, die über Führungsrundeisen 36 gesteckt und auf den Führungsrundeisen verschoben werden können. Dadurch können die Haltevorrichtungsteile bis unmittelbar auf den Beckenboden oder bis auf einen gewünschten Abstand über dem Beckenboden heruntergeschoben bzw. zur Wasseroberfläche heraufgezogen werden.

An den gegenüberliegenden Enden der Belüftungsschläuche 2 sind Rollen 13 angeordnet, über die die nicht näher dargestellten Spannseile gelegt sind. Zwischen den Rollen 10 und den Enden der Belüftungsschläuche 2 sind Wirbel 14 vorgesehen.

Quer zur Spannrichtung der Belüftungsschläuche 2 sind in gleichem Abstand und parallel zueinander Führungsseile 60 vorgesehen, die an der Beckenwand 11 mittels Ringschrauben 30 befestigt sind. Zusätzlich sind weitere Ringschrauben 28 vorgesehen, die in gleichen Abständen zueinander im Beckenboden 1 befestigt sind. Somit dienen die Führungsseile 60 in Verbindung mit den in die Beckenwand 11 eingeschraubten Ringschrauben 30 sowie den in den Beckenboden eingeschraubten Ringschrauben 28 als Führungsbügel zum Führen der Belüftungsschläuche 2 und zu ihrer horizontalen Ausrichtung.

Wie dieser Darstellung gemäß Figur 5 zu entnehmen ist, handelt es sich um eine verhältnismäßig einfache Anordnung und Anbringung der Belüftungsschläuche 2 im Bereich des Beckenbodens 1 zum feinblasigen Belüften des im Becken befindlichen Wassers. Beim eventuell erforderlichen Auswechseln eines Belüftungsschlauches wird die zugeordnete Haltevorrichtung 26 zur Wasseroberfläche bei gelockerten Spannseilen gezogen, der betreffende Belüftungsschlauch 2 von der Haltevorrichtung 26 abgenommen und aus dem Becken gezogen. Anschließend kann ein neuer oder der gereinigte Belüftungsschlauch 2 an dem Wirbel 14 befestigt und eingezogen werden. Daran anschließend können sämtliche den betreffenden Haltevorrichtungen 26 zugeordnete Belüftungsschläuche 2 erneut in den vorbestimmten Dehnungszustand durch Spannen der Spannseile gebracht werden.

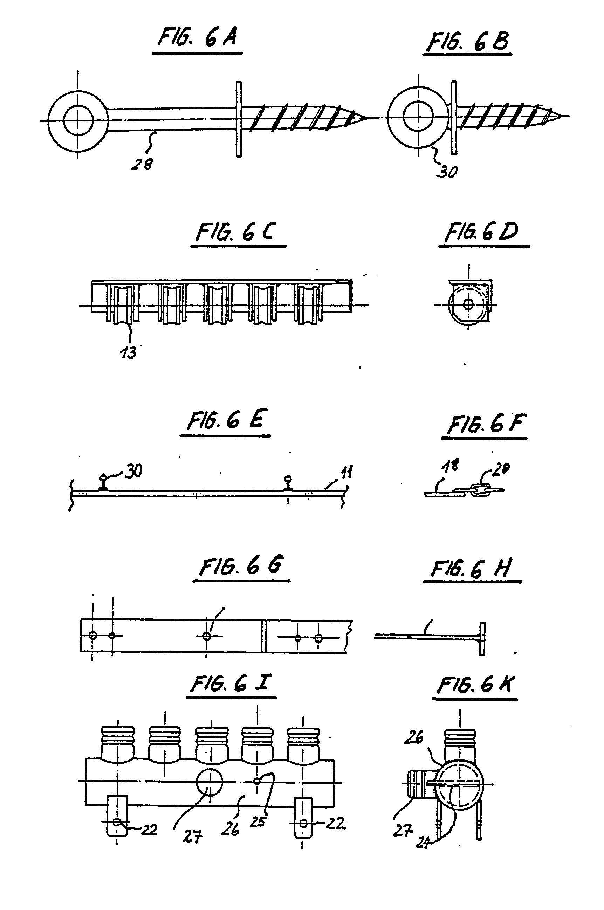

Figur 6 zeigt nähere Einzelheiten der Einrichtung zum Führen und Halten der Belüftungsschläuche gemäß Figur 5.

Im einzelnen zeigt Figur 6A die Ausgestaltung einer im Beckenboden zu befestigenden Ringschraube 28, während Figur 6B die Ausführungsform einer in der Beckenwand zu befestigenden Ringschraube 30 ziegt, an der das betreffende Führungsseil befestigt werden kann. Der größere Abstand zwischen dem am Beckenboden anliegenden Teller zur Öse für die Aufnahme des Führungsseiles gegenüber dem kurzen Abstand der Ringschraube 30 gemäß Figur 6B dient dazu, das Führungsseil in einem bestimmten Abstand vom Beckenboden zu halten, damit darunter der betreffende Belüftungsschlauch bzw. die Belüftungsschläuche hindurchgezogen werden können.

Figur 6C zeigt eine Draufsicht und Figur 6D eine Seitenansicht der Rollen 13, die zum Hindurchziehen bzw. Durchwinden der Zug- und Spannseile verwendet werden und an einer der Beckenwände befestigt sind.

Figur 6E zeigt die Anordnung der Ringschrauben 30 am Beckenrand 11.

Figur 6F zeigt die Anordnung der Haken 18 und Ösen 20 am Ende der Spannseile, die am Beckenrand befestigt sind.

Figur 6G zeigt eine Draufsicht und Figur 6H eine Seitenansicht der auf einer gemeinsamen Schiene befestigten Führungs-Rundeisen 36, über die die entsprechenden Führungsringe zur Aufnahme der Haltevorrichtungen gesteckt werden.

Eine entsprechende Haltevorrichtung ist in Figur 6I dargestellt, die fünf Anschlußstutzen zum Befestigen von fünf Belüftungsschläuchen aufweist. Die Druckluft-Zufuröffnung 27 dient zur Aufnahme des Zufuhrschlauches 3, während die Entlüfungs- und Entwässerungsöffnung 25 zur Aufnahme eines entsprechenden Entlüftungs- und Entwässerungsschlauches 24 dient. Jeweils zwei Führungsringe 22 dienen zur Arretierung der betreffenden Haltevorrichtung 26.

Figur 6K zeigt eine Seitenansicht der Haltevorrichtung gemäß Figur 6I.

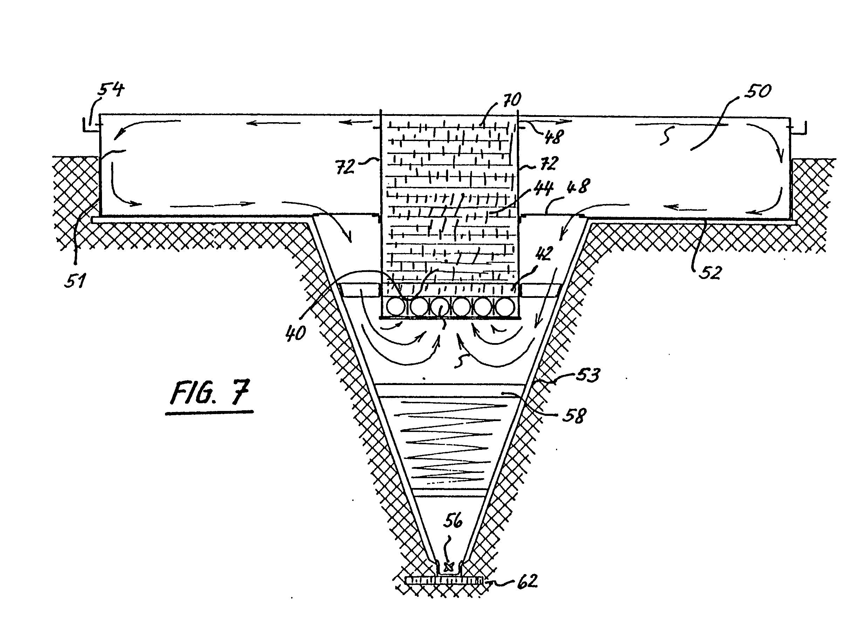

Figur 7 zeigt einen Querschnitt durch ein Fischzuchtbecken 50, in dem eine Vorrichtung zum feinblasigen Belüften des im Fischzuchtbecken befindlichen Wassers in Verbindung mit einem als Container ausgebildeten statischen Mischer eingesetzt ist. Das Fischzuchtbecken 50 weist einen im wesentlichen waagerechten Beckenboden 52 auf, der vorzugsweise mittig in einen grabenförmigen Teil übergeht, der schräge Beckenwände 53 aufweist. Die im oberen Teil des Fischzuchtbeckens 50 vorgesehenen Beckenwände 51 weisen in Höhe des Wasserspiegels Ablauflöcher auf, über die Wasser in eine Ablaufrinne 54 abfließen kann. der grabenförmige Teil des Beckenbodens ist auf einem Fundament 62 abgestützt und weist in seinem unteren rinnenförmigen Teil eine Räumkette 56 auf, mit deren Hilfe Schlamm, der sich in der V-fömigen Beckenvertiefung absetzt, zu einem Beckenende transportiert wird, wo er ablaufen kann oder abgezogen wird. Der Beckenboden 52 kann auch mehrere V-förmige Vertiefungen aufweisen.

Die Vorrichtung zum feinblasigen Belüften des im Fischzuchtbecken 50 befindlichen Wassers befindet sich vorzugsweise im oberen Drittel der V-förmigen Beckenvertiefung und besteht analog zu den vorstehend beschriebenen Ausführungsbeispielen aus perforierten, elastischen Belüftungsschläuchen 2, die zwischen senkrecht angeordneten Führungsstangen 40 angeordnet sind. Über den Führungsstangen 40 sind quer dazu verlaufende Befestigungsstangen 42 oder Siebe, Lochbleche o.dgl. angeordnet, durch die die Belüftungsschläuche 2 am Auftrieb gehindert werden und die zusammen mit den Führungsstangen 40 einen Kanal zur Aufnahme der Belüftungsschläuche 2 ergeben.

Oberhalb der Befestigungsstangen 42 oder Siebe, Lochbleche o.dgl. sind Packungen 44 angeordnet, die zusammen mit der Belüftungsvorrichtung in einem Container 70 untergebracht sind, der durch seitliche Containerwände 72 abgeschlossen wird. Die Packungen 44 sind vorzugsweise als sogenannte statische Mischer ausgebildet, sie bestehen vorzugsweise aus Füllkörpern, wie sie aus der Deutschen Auslegeschrift Nr. 16 01 131 bekannt sind und ergeben in Verbindung mit der Belüftungsvorrichtung und dem Container einen Mammutpumpeneffekt, durch den die mit Pfeilen eingetragenen Strömungen hervorgerufen werden.

Sowohl an den Containerwänden 72 als auch in der Verbindung des im wesentlichen waagerecht verlaufenden Beckenbodens 52 mit V-förmigen Vertiefungen sind Gitter, Siebe, Lochbleche o.dgl. angebracht, die die im Fischzuchtbecken 50 befindlichen Fische daran hindern, in den Container 70 mit den Packungen 44 bzw. in den V-förmigen Vertiefungsteil des des Fischbeckens 50 zu schwimmen. Der Container kann auch oben mit Gittern, Sieben, Lochblechen o.dgl. abgeschlossen sein und braucht nicht bis zum Flüssigkeitsspiegel zu reichen.

Zusätzlich im Vertiefungsteil des Beckenbodens angeordnete Querstreben 58 dienen zur statischen Befestigung des V-förmigen Tiefteiles, wobei Verlängerungen der quer zu den Führungsstangen 40 verlaufenden Befestigungsstangen 42 ebenfalls zur Verstrebung und zugleich zum Tragen der Packungen 44 bzw. des Containers 70 dienen.

Die Belüftungsschläuche 2 sind analog zu den vorstehend beschriebenen Ausführungsbeispielen an den jeweiligen Stirnseiten mit vorderen bzw. hinteren Haltevorrichtungen verbunden, über die einerseits Druckluft zugeführt und andererseits die nötige Vorspannung zur Dehnung der Belüftungsschläuche 2 hergestellt wird. Dabei weisen die Belüftungsschläuche 2 mindestens so viele Perforationen auf, daß unter jeder der Öffnungen, die von dem statischen Mischer in vertikaler Richtung gebildet werden, mindestens eine Schlauchperforation vorgesehen ist.

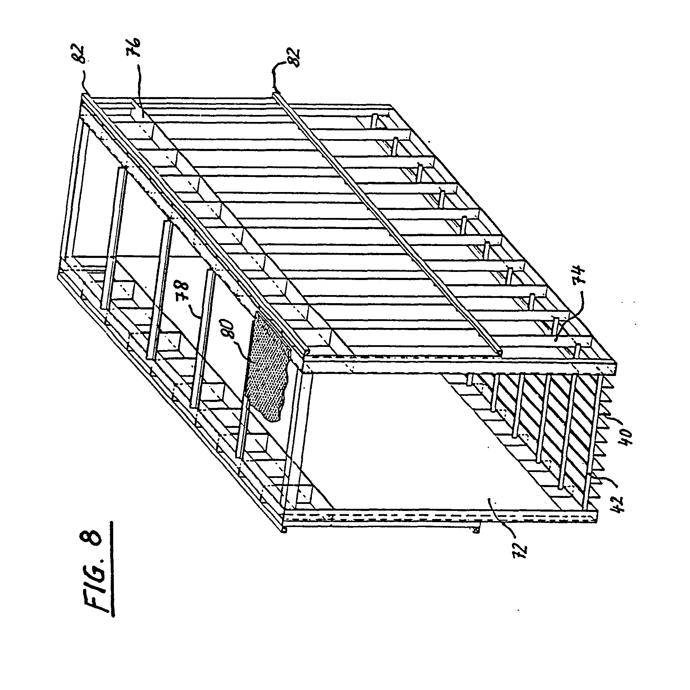

Figur 8 zeigt eine perspektivische Ansicht des in Figur 7 dargestellten Containers und verdeutlicht dessen konstruktive Ausgestaltung.

Im unteren Teil besteht der Container 70 aus den in Längsrichtung verlaufenden und der seitlichen Führung der Belüftungsschläuche dienenden Führungsstangen 40, über die die querverlaufenden Befestigungsstangen 42 angeordnet sind. Die Befestigungsstangen 42 sind mit den Container-wänden 72 verbunden, die senkrecht verlaufende Armierungsbleche 74 aufweisen. Die Armierungsbleche 74 sind untereinander mittels Längsschienen 82 verbunden und weisen im oberen Teil Abströmungs-Leitbleche 76 auf.

Die Abströmungs-Leitbleche 76 können zusätzlich Vorrichtungen zur Aufnahme von Sieben u. dgl. enthalten.

Die Oberfläche des Containers 70 wird durch die Container-wände 72 verbindende Verstrebungsschienen 78 gebildet, auf die Laufgitter 80 aufgelegt werden können.

Ein derartiger Container 70 kann sowohl im Tiefteil eines Fischzuchtbeckens als auch auf einem flachen Beckenboden angebracht werden. Des weiteren können mehrere Container 70 hintereinander und nebeneinander angeordnet werden, so daß die Erstellung entsprechender Anlagen, die aus Einzelbaukörpern zusammengesetzt sind, ermöglicht wird.

In die Packungen 44 können zusätzlich lose Schüttungen aus Sand, Bimsstein, Aktivkohle, Kunststoffgranulat u. dgl. gegeben werden, die eine möglichst große Oberfläche zur Aufnahme eines sogenannten biologischen Rasens oder z.B. von oberflächen-fixierten Katalysatoren haben.

**Patentansprüche**

1. Verfahren zum großflächigen, feinblasigen Begasen von Flüssigkeiten mit einer porösen oder perforierten, stützkörperfreien, elastischen Membran, der ein Gas zugeführt wird, das durch die Membran aus- und in die Flüssigkeit eintritt, wobei die Membran an zumindest zwei gegenüberliegenden Seiten in Haltevorrichtungen eingespannt wird, dadurch gekennzeichnet, daß die Membran (2) mit Hilfe der Haltevorrichtungen durch Umlenkeinrichtungen (10) und Führungsvorrichtungen, die in einem Flüssigkeitsbehälter angebracht sind und die eine horizontale Ausrichtung der Membran (2) gewährleisten, gezogen wird, und daß durch Veränderung der Zugkraft an zumindest einer Haltevorrichtung die Lage und/oder der Dehnungszustand der Membran (2) in einer Längsrichtung verändert wird.

2. Verfahren nach Anspruch 1, dadurch gekennzeichnet, daß die elastische Membran (2) schlauchförmig ausgebildet ist, und aus einem dauerelastischen Kunststoff, Gummi oder dergleichen mit einer Wandstärke von weniger als 2 mm, vorzugsweise weniger als 0,5 mm besteht.

3. Verfahren nach Anspruch 1, dadurch gekennzeichnet, daß der Dehnungszustand der elastischen Membran (2) in Querrichtung bei unveränderter Position der Haltevorrichtungen durch verstärkte, reduzierte oder unterbrochene Gaszufuhr verändert wird.

4. Verfahren nach einem der vorstehenden Ansprüche, dadurch gekennzeichnet, daß die elastische Membran (2) im Betriebszustand in Längsrichtung um einen vorbestimmten, festen Betrag, vorzugsweise um 5 bis 25% gegenüber ihren Abmessungen im Ruhezustand gedehnt wird.

5. Verfahren nach einem der vorstehenden Ansprüche, dadurch gekennzeichnet, daß die Dehnung der elastischen Membran (2) in Längsrichtung in Abhängigkeit vom Gasdruck auf der einen Seite der elastischen Membran (2) vorgenommen wird.

6. Verfahren nach Anspruch 5, dadurch gekennzeichnet, daß die Dehnung der elastischen Membran (2) in Längsrichtung in Abhängigkeit von der Differenz zwischen dem Gasdruck auf der einen Seiten der elastischen Membran (2) und dem Flüssigkeitsdruck auf der anderen Seite der elastischen Membran (2) vorgenommen wird.

7. Verfahren nach einem der Ansprüche 4 bis 6, dadurch gekennzeichnet, daß bei der im Betriebszustand in Längsrichtung gedehnten elastischen Membran (2) zum Reinigen die Gaszufuhr unterbrochen, im Inneren der Membran (2) befindliches Restgas und Flüssigkeit über eine Entwässerungs- und Entlüftungsleitung (24) abgelassen wird, daß die Dehnung der elastischen Membran (2) in Längsrichtung aufgehoben wird, daß nach einer vorbestimmten Zeit die elastische Membran (2) erneut gedehnt wird, und daß daran anschließend erneut Gas in die elastische Membran (2) eingeleitet wird.

8. Verfahren nach einem der Ansprüche 4 bis 6, dadurch gekennzeichnet, daß bei der im Betriebszustand in Längsrichtung entspannten elastischen Membran (2) zum Reinigen die Gaszufuhr unterbrochen, im Innern der Membran (2) befindliches Restgas und Flüssigkeit über eine Entwässerungs- und Entlüftungsleitung (24) abgelassen wird, daß die elastische Membran (2) in Längsrichtung gedehnt wird, daß die elastische Membran (2) in Längsrichtung wieder entspannt wird und daß anschließend die Gaszufuhr wieder auf einen den Betriebszustand entsprechenden Wert gebracht wird.

9. Verfahren nach einem der Ansprüche 4 bis 6, dadurch gekennzeichnet, daß bei der im Betriebszustand in Längsrichtung entspannten elastischen Membran (2) zum Reinigen Gas unter erhöhtem Druck zugeführt und/oder Zug auf die elastische Membran (2) zum Dehnen ausgeübt wird, und daß anschließend die Gaszufuhr auf einen dem Betriebszustand entsprechenden Wert gebracht und/oder die auf die elastische Membran (2) ausgeübte Zugkraft verringert bzw. aufgehoben wird.

10. Vorrichtung zum großflächigen, feinblasigen Begasen von Flüssigkeiten mit einer porösen oder perforierten, stützkörperfreien, elastischen Membran, der ein Gas zugeführt wird, das aus der elastischen Membran aus- und in die Flüssigkeit eintritt, wobei die elastische Membran an zumindest zwei gegenüberliegenden Seiten in Haltevorrichtungen eingespannt ist, dadurch gekennzeichnet, daß in einem Flüssigkeitsbehälter horizontal ausgerichtete Führungsvorrichtungen (6; 60) angeordnet sind, daß die elastische Membran (2) mit Hilfe der Haltevorrichtungen (12, 14, 16, 18, 20) durch die Führungsvorrichtungen (6; 60) gezogen ist, und daß der Dehnungszustand der elastischen Membran (2) durch Mittel zur Veränderung der Lage der Haltevorrichtungen (12, 14, 16, 18, 20) in Längsrichtung veränderbar ist.

11. Vorrichtung nach Anspruch 10, dadurch gekennzeichnet, daß die elastische Membran (2) mit einer Einrichtung (3) zur Zufuhr eines Gases und mit einer Einrichtung (24) zum Ablassen von Gas und Flüssigkeit verbunden ist.

12. Vorrichtung nach Anspruch 10 oder 11, dadurch gekennzeichnet, daß die elastische Membran (2) geschlossen und im Bereich des Bodens des Flüsigkeitsbehälters angeordnet ist und daß zumindest ein Teil der zur Flüssigkeitsoberfläche gerichteten Oberseite der elastischen Membran (2) perforiert, vorzugsweise gelocht, geschlitzt oder mit Kreuzschlitzen versehen oder porös ausgebildet ist.

13. Vorrichtung nach Anspruch 12, dadurch gekennzeichnet, daß im Innern der elastischen Membran (2) eine Vorrichtung zum Messen des Gasdruckes angeordnet ist und daß eine Einrichtung vorgesehen ist, die über die Haltevorrichtungen (12, 14, 16, 18, 20) in Abhängigkeit vom Gasdruck das Dehnungsmaß verändert.

14. Vorrichtung nach einem der vorstehenden Ansprüche 10 bis 13, dadurch gekennzeichnet, daß die elastische Membran (2) aus mindestens einem porösem oder perforierten Belüftungsschlauch (2) besteht, der mittels der Führungsvorrichtung (6; 60) parallel zur Flüssigkeitsoberfläche (1) gehalten wird, und daß die Führungsvorrichtung aus an der Unterseite des porösen oder perforierten Belüftungsschlauches (2) befestigten, formveränderlichen Gewichten besteht.

15. Vorrichtung nach Anspruch 14, dadurch gekennzeichnet, daß die Führungsvorrichtung aus quer zur Längsrichtung des Belüftungsschlauches/der Belüftungsschläuche (2) angeordneten Abspannvorrichtungen (6; 60) besteht, unter denen der Belüftungsschlauch/die Belüftungsschläuche (2) frei beweglich angeordnet sind.

16. Vorrichtung nach Anspruch 15, dadurch gekennzeichnet, daß die Abspannvorrichtung aus mit Befestigungsschienen (4) verbundenen Befestigungsbügeln (6; 61, 63) besteht, die in vorbestimmten Abständen zueinander den Belüftungsschlauch/die Belüftungsschläuche (2) umfassen, wobei die parallel zum Belüftungsschlauch/den Belüftungsschläuchen (2) verlaufenden, am Behälterboden (1), an der Behälterwand oder in einem Container befestigten Befestigungsschienen (6) als Führungsschienen dienen.

17. Vorrichtung nach Anspruch 15, dadurch gekennzeichnet, daß die Abspannvorrichtung aus quer zur Längsrichtung des Belüftungsschlauches/der Belüftungsschläuche (2) verlaufenden Spannseilen (60) besteht, die mittels Ringschrauben an gegenüberliegenden Beckenrändern (11) befestigt sind und mittels weiterer Ringschrauben (28) vom Beckenboden beabstandet angeordnet sind.

18. Vorrichtung nach einem der vorstehenden Ansprüche 10 bis 17, dadurch gekennzeichnet, daß im Bereich der Behälterwand (11) Umlenkeinrichtungen (10) angeordnet sind, über die der/die Belüftungsschläuche (2) in den Flüssigkeitsbehälter abgesenkt bzw. aus dem Flüssigkeitsbehälter entnehmbar sind.

19. Vorrichtung nach einem der vorstehenden Ansprüche 10 bis 18, dadurch gekennzeichnet, daß der/die Belüftungsschläuche (2) zwischen parallel zu dem/den Belüftungsschläuchen (2) verlaufenden, senkrecht angeordneten Führungsstangen (40) angeordnet sind und daß oberhalb der Führungsstangen (40) und quer zu den Führungsstangen (40) verlaufend Befestigungsstangen (42) angeordnet sind, die zusammen mit den Führungsstangen (40) einen Kanal/Kanäle zur Aufnahme des/der Belüftungsschläuche (2) ergeben und daß die Führungsstangen (40) und die Befestigungsstangen (42) den unteren Teil eines Containers (70) bilden, der seitlich durch Containerwände (72) abgeschlossen ist und in dem als statische Mischer ausgebildete Packungen (44) angeordnet sind.

20. Vorrichtung nach Anspruch 19, dadurch gekennzeichnet, daß der/die Belüftungsschläuche (2) mindest soviele Perforationen aufweist/aufweisen, daß unter jeder Öffnung, die von dem statischen Mischer in vertikaler Richtung gebildet werden, mindestens eine Perforation vorgesehen ist.

21. Vorrichtung nach einem der vorstehenden Ansprüche 10 bis 20, dadurch gekennzeichnet, daß zwischen der elastischen Membran (2) beziehungsweise der/den Belüftungsschläuchen (2) und der Haltevorrichtung (12, 14, 16, 18, 20) ein Wirbel (14) angeordnet ist.

22. Vorrichtung nach Anspruch 19, dadurch gekennzeichnet, daß über dem/den Belüftungsschläuchen (2) und über den Packungen (44) Siebe, Loch-bleche (71) oder dergleichen angeordnet sind.

23. Vorrichtung nach Anspruch 19, dadurch gekennzeichnet, daß die Containerwände (72) wenigstens in der Nähe des Beckenbodens (52) bzw. des Flüssigkeitsspiegels aus Sieben, Lochblechen oder dergleichen bestehen.

24. Vorrichtung nach Anspruch 19, dadurch gekennzeichnet, daß in den Packungen (44) lose Füllkörper wie Sand, Aktivkohle, Bimsstein, Kunststoff, Granulat oder dergleichen vorgesehen sind.

25. Vorrichtung nach Anspruch 24, dadurch gekennzeichnet, daß die Füllkörper so übereinander angeordnet sind, daß die den Füllkörper bildenden Bänder bzw. Kanäle übereinander unterschiedliche Richtungen aufweisen, derart, daß die unteren Ränder der Bänder einer Füllkörperlage mit den oberen Rändern der darunter befindlichen Füllkörperbänder Winkel bilden, wobei die Kanäle einer unteren Füllkörperlage vertikal gesehen von den Rändern der Bänder der darüber befindlichen Füllkörperlage geschnitten werden.

**Revendications**

1. Procédé de gazéification de liquides en fines bulles et sur de grandes surfaces par une membrane élastique poreuse ou perforée, dépourvue de corps d'appui, à laquelle est amené un gaz qui sort à travers la membrane et entre dans le liquide, la membrane étant encastrée dans des dispositifs de retenue sur au moins deux côtés opposés, caractérisé en ce que la membrane (2) est étirée à l'aide de dispositifs de retenue par des dispositifs de renvoi (10) et des dispositifs de guidage qui sont montés dans un réservoir de liquide et qui assurent une orientation horizontale de la membrane (2) et en ce que, par variation de la force de traction sur au moins un dispositif de retenue, la position et/ou l'état d'allongement de la membrane (2) dans une direction longitudinale est modifié.

2. Procédé selon la revendication 1, caractérisé en ce que la membrane élastique (2) est réalisée en forme de tuyau souple et consiste en une matière synthétique, en du caoutchouc ou analogue élastique en permanence avec une épaisseur de paroi de moins de 2 mm, de préférence inférieure à 0,5 mm.

3. Procédé selon la revendication 1, caractérisé en ce que l'état d'allongement de la membrane élastique (2) en direction transversale est modifié, pour une position inchangée des dispositifs de retenue, par une amenée de gaz renforcée, réduite ou interrompue.

4. Procédé selon l'une des revendications précédentes, caractérisé en ce que la membrane élastique (2) est allongée, en l'état de service en direction longitudinale, d'une valeur fixe prédéterminée, de préférence de 5 à 25% par rapport à ses dimensions à l'état de repos.

5. Procédé selon l'une des revendications précédentes, caractérisé en ce que l'allongement de la membrane élastique (2) en direction longitudinale est entrepris en fonction de la pression de gaz sur l'un des côtés de la membrane élastique (2).

6. Procédé selon la revendication 5, caractérisé en ce que l'allongement de la membrane élastique (2) en direction longitudinale est entrepris en fonction de la différence entre la pression de gaz sur l'une des faces de la membrane élastique (2) et la pression de liquide sur l'autre face de la membrane élastique (2).

7. Procede selon l'une des revendications 4 à 6, caractérisé en ce que, pour l'état de fonctionnement de la membrane élastique (2) allongée en direction longitudinale, pour le nettoyage, l'amenée de gaz est interrompue, le gaz résiduel se trouvant à l'intérieur de la membrane (2) et le liquide sont évacués par l'intermédiaire d'une conduite d'évacuation d'eau et de désaération (24), en ce que l'allongement de la membrane élastique (2) en direction longitudinale est supprimé, en ce qu'après un temps prédéterminé, la membrane élastique (2) est allongée de nouveau et en ce qu'à la suite de cela, du gaz est introduit de nouveau dans la membrane élastique (2).

8. Procédé selon l'une des revendications 4 à 6, caractérisé en ce que, dans le cas de la membrane élastique (2) détendue en direction longitudinale en l'état de service, pour le nettoyage, l'amenée de gaz est interrompue, le gaz résiduel se trouvant à l'intérieur de la membrane (2) et le liquide sont évacués par l'intermédiaire d'une conduite d'évacuation d'eau et de désaération (24), en ce que la membrane élastique (2) est allongée en direction longitudinale, en ce que la membrane élastique (2) est de nouveau détendue en direction longitudinale et en ce qu'à la suite de cela, l'amenée de gaz est de nouveau portée à une valeur correspondant à l'état d'exploitation.

9. Prccédé selon l'une des revendications 4 à 6, caractérisé en ce que, dans le cas de la membrane élastique (2) détendue en direction longitudinale en l'état de fonctionnement, pour le nettoyage, du gaz sous pression accrue est amené et/ou une traction est exercée sur la membrane élastique (2) pour l'allongement et en ce qu'ensuite l'amenée de gaz est portée à une valeur correspondant à l'état de service et/ou la force de traction, exercée sur la membrane élastique (2), est diminuée ou supprimée.

10. Dispositif de gazéification de liquides en fines bulles sur de grandes surfaces, comprenant une membrane élastique poreuse ou perforée, exempte de corps d'appui, à laquelle est amené un gaz qui sort de la membrane élastique et entre das le liquide, la membrane élastique étant encastrée dans des dispositifs de retenue au moins sur deux côtés opposés, caractérisé en ce que dans un réservoir de liquide horizontal sont disposés des dispositifs de guidage (6; 60) alignés horizontalement, en ce que la membrane élastique (2) est tirée à l'aide des dispositifs de retenue (12, 14, 16, 18, 20) à travers les dispositifs de guidage (6; 60) et en ce que l'état d'allongement de la membrane élastique (2) est variable en direction longitudinale par des moyens pour la modification de la position des dispositifs de retenue (12, 14, 16, 18, 20).

11. Dispositif selon la revendication 10, caractérisé en ce que la membrane élastique (2) est reliée à un système (3) pour l'amenée d'un gaz et à un système (24) pour l'évacuation de gaz et de liquide.

12. Dispositif selon la revendication 10 ou 11, caractérisé en ce que la membrane élastique (12) est fermée et montée au voisinage du fond du réservoir de liquide et en ce qu'au moins une partie de la face supérieure de la membrane élastique (2) dirigée vers la surface supérieure du liquide est perforée, de préférence trouée, fendue ou pourvue de fentes en croix ou réalisée de façon à être poreuse.

13. Dispositif selon la revendication 12, caractérisé en ce qu'à l'intérieur de la membrane élastique (2) est disposé un dispositif pour la mesure de la pression de gaz et en ce qu'un système est prévu, lequel modifie par l'intermédiaire des dispositifs de retenue (12, 14, 16, 18, 20), le degré d'allongement en fonction de la pression de gaz.

14. Dispositif selon l'une des revendications précédentes 10 à 13 caractérisé en ce que la membrane élastique (2) consiste en au moins un tuyau souple d'aération poreux ou perforé (2) qui est maintenu parallèlement à la surface supérieure de liquide (1) au moyen du dispositif de guidage (6; 60) et en ce que le dispositif de guidage se compose de poids de forme variable fixés sur le côté inférieur du tuyau souple d'aération poreux ou perforé (2).

15. Dispositif selon la revendication 14, caractérisé en ce que le dispositif de guidage se compose de dispositifs tendeurs (6; 60) disposés transversalement à la direction longitudinale du tuyau souple d'aération/des tuyaux souples d'aération (2) sous lesquels le tuyau souple d'aération/les tuyaux souples d'aération (2) sont montés de façon à être librement mobiles.

16. Dispositif selon la revendication 15, caractérisé en ce que le dispositif tendeur se compose d'étriers de fixation (6; 61, 63) reliés à des barres de fixation (4), lesquels embrassent, selon des espacements prédéterminés les uns par rapport aux autres, le tuyau souple d'aération/les tuyaux souples d'aération (2), auquel cas les barres de fixation (6), s'étendant parallèlement au tuyau souple d'aération/aux tuyaux souples d'aération (2), et fixées sur le fond de réservoir (1) à la paroi de réservoir ou dans un conteneur, servent de barres de guidage.

17. Dispositif selon la revendication 15, caractérisé en ce que le dispositif tendeur se compose de câbles tendeurs (60) s'étendant transversalement à la direction longitudinale du tuyau souple d'aération/des tuyaux souples d'aération (2), qui sont fixés au moyen de pitons annulaires à vis aux bords de bassin opposés (11) et sont montés au moyen d'autres pitons annulaires à vis (28) en étant espacés du fond de bassin.

18. Dispositif selon l'une des revendications précédentes 10 à 17 caractérisé en ce qu'au voisinage de la paroi de réservoir (10) sont montés des systèmes de déviation (10) par l'intermédiaire desquels le/les tuyau(x) souple(s) d'aération (2) sont abaissés dans le réservoir de liquide ou peuvent être enlevés du réservoir de liquide.

19. Dispositif selon l'une des revendications précédentes 10 à 18, caractérisé en ce que le/les tuyau(x) souple(s) d'aération (2) sont disposés entre des tiges de guidage (40) s'étendant parallèlement au/aux tuyau(x) souple(s) d'aération (2) et disposées verticalement et en ce qu'au-dessus des tiges de guidage (40) sont montées des tiges de fixation (42) s'étendant transversalement aux tiges de guidage (40) et qui, ensemble avec les tiges de guidage (40), constituent un canal/des canaux pour la réception du/des tuyau(x) souple(s) d'aération (2) et en ce que les tiges de guidage (40) et les tiges de fixation (42) forment la partie inférieure d'un conteneur (70) qui est fermé latéralement par des parois de conteneur (72) et dans lequel sont montées des garnitures (44) réalisées sous forme de mélangeur statique.

20. Dispositif selon la revendication 19 caractérisé en ce que le/les tuyau(x) souple(s) d'aération (2) comportent au moins autant de perforations qu'en dessous de chacun des orifices qui sont constitués en direction verticale par le mélangeur statique, est prévue au moins une perforation.

21. Dispositif selon l'une des revendications précédentes 10 à 20, caractérisé en ce qu'entre la membrane élastique (2) ou le/les tuyau(x) souple(s) d'aération (2) et le dispositif de retenue (12, 14, 16, 18, 20) est monté un raccord articulé à émérillon (14).

22. Dispositif selon la revendication 19, caractérisé en ce qu'au-dessus du/des tuyau(x) souple(s) d'aération (2) et au-desssus des garnitures (44) sont montés des tamis, des tôles perforées (71) ou analogues.

23. Dispositif selon la revendication 19, caractérisé en ce que les parois de conteneur (72) consistent, à proximité du fond de bassin (52) ou de la surface de liquide, en des tamis, tôles perforées ou analogues.

24. Dispositif selon la revendication 19, caractérisé en ce que dans les garnitures (44) sont prévus des corps de remplissage meubles tels que du sable, du charbon actif, de la pierre ponce, de la matière synthétique, du granulat ou analogues.

25. Dispositif selon la revendication 24, caractérisé en ce que les corps de remplissage sont disposés de telle façon les uns au-dessus des autres que les bandes ou canaux, formant les corps de remplissage, présentent des directions différentes les unes au-dessus des autres de telle manière que les bords inférieurs des bandes d'une couche de corps de remplissage forment des angles avec les bords supérieurs des bandes de corps de remplissage se trouvant en dessous, auquel cas les canaux d'une couche de corps de remplissage inférieure, vus verticalement, sont coupés par les bords des bandes de la couche de corps de remplissage se trouvant au-dessus.

## Claims

1. Process for the large-area, fine-bubbled gassing of liquids with a porous or perforated elastic membrane which is without supporting members, to which membrane a gas is supplied which emerges through the membrane and enters into the liquid, with the membrane being gripped in holding devices on at least two opposing sides, characterised in that the membrane (2) is pulled with the aid of the holding devices through deflection means (10) and guide devices which are located in a liquid vessel and which ensure horizontal orientation of the membrane (2), and that the position and/or the state of expansion of the membrane (2) is altered in a longitudinal direction by altering the tensile force on at least one holding device.

2. Process according to Claim 1, characterised in that the elastic membrane (2) is in the form of a tube, and is made of a permanently elastic plastics material, rubber or the like having a wall thickness of less than 2 mm, preferably less than 0.5 mm.

3. Process according to Claim 1, characterised in that the state of expansion of the elastic membrane (2) in the transverse direction is altered with an unchanged position of the holding devices by intensified, reduced or interrupted supply of gas.

4. Process according to one of the preceding Claims, characterised in that the elastic membrane (2) in the operating state is expanded in the longitudinal direction by a predetermined, fixed amount, preferably by 5 to 25% relative to its dimensions in the rest state.

5. Process according to one of the preceding Claims, characterised in that the expansion of the elastic membrane (2) in the longitudinal direction is carried out dependent on the gas pressure on one side of the elastic membrane (2).

6. Process according to Claim 5, characterised in that the expansion of the elastic membrane (2) in the longitudinal direction is effected in dependence upon the difference between the gas pressure on one side of the elastic membrane (2) and the liquid pressure on the other side of the elastic membrane (2).

7. Process according to one of Claims 4 to 6, characterised in that, in the case of the elastic membrane (2) expanded in the longitudinal direction in the operating state, for cleaning purposes the gas supply is interrupted, residual gas and liquid contained inside the membrane (2) is drained off through a drain pipe and vent line (24), that the expansion of the elastic membrane (2) in the longitudinal direction is neutralised, that after a predetermined time the elastic membrane (2) is expanded again, and that gas is then reintroduced into the elastic membrane (2).

8. Process according to one of Claims 4 to 6, characterised in that, in the case of the elastic membrane (2) which has undergone tension release in the longitudinal direction in the operating state, for cleaning purposes the gas supply is interrupted, residual gas and liquid contained inside the membrane (2) is drained off through a drain pipe and vent line (24), that the elastic membrane (2) undergoes tension release in the longitudinal direction, that the elastic membrane (2) is expanded again in the longitudinal direction, and that the gas supply is then brought back to a value corresponding to the operating state.

9. Process according to one of Claims 4 to 6, characterised in that, in the case of the elastic membrane (2) which has undergone tension release in the longitudinal direction in the operating state, for cleaning purposes gas is supplied under increased pressure and/or tension is exerted on the elastic membrane (2) for expansion, and that the gas supply is then brought to a value corresponding to the operating state and/or the tensile force exerted on the elastic membrane (2) is reduced or offset.

10. Device for the large-area, fine-bubbled gassing of liquids with a porous or perforated elastic membrane which is without supporting members, to which membrane a gas is supplied which emerges from the elastic membrane and enters into the liquid, with the elastic membrane being gripped in holding devices on at least two opposing sides, characterised in that horizontally aligned guide devices (6; 60) are disposed in a liquid vessel, that the elastic membrane (2) is drawn through the guide devices (6; 60) with the aid of the holding devices (12, 14, 16, 18, 20), and that the state of expansion of the elastic membrane (2) can be altered in the longitudinal direction by means for altering the position of the holding devices (12, 14, 16, 18, 20).

11. Device according to Claim 10, characterised in that the elastic membrane (2) is connected to an apparatus (3) for supplying a gas and to a means (24) for draining off gas and liquid.

12. Device according to Claim 10 or 11, characterised in that the elastic membrane (2) is closed and is disposed in the region of the base of the liquid vessel, and that at least part of the upper side of the elastic membrane (2) which is directed towards the surface of the liquid is perforated, preferably punched with holes, slit or provided with crossed slits, or is designed to be porous.

13. Device according to Claim 12, characterised in that a device for measuring the gas pressure is disposed inside the elastic membrane (2) and that a device is provided which alters the amount of expansion via the holding devices (12, 14, 16, 18, 20) dependent on the gas pressure.

14. Device according to one of the preceding Claims 10 to 13, characterised in that the elastic membrane (2) consists of at least one porous or perforated aeration tube (2) which is held parallel to the surface (1) of the liquid by means of the guide device (6; 60), and that the guide device consists of weights which are attached to the underside of the porous or perforated aeration tube (2) and which are of variable shape.

15. Device according to Claim 14, characterised in that the guide device consists of anchoring devices (6; 60) disposed transversely to the longitudinal direction of the aeration tube(s) (2), beneath which devices the aeration tube(s) (2) is/are disposed in freely movable manner.

16. Device according to Claim 15, characterised in that the anchoring device consists of fixing brackets (6; 61, 63) connected to attachment rails (4), which brackets surround the aeration tube(s) (2) at predetermined distances from each other, with the attachment rails (6) which run parallel to the aeration tube(s) (2) and are attached to the vessel base (1), to the vessel wall or in a container serving as guide rails.

17. Device according to Claim 15, characterised in that the anchoring device consists of bracing wires (60) running transversely to the longitudinal direction of the aeration tube(s) (2), which wires are attached to opposite tank edges (11) by means of screw eyes and which are disposed at a distance from the base of the tank by means of further screw eyes (28).

18. Device according to one of the preceding Claims 10 to 17, characterised in that deflection means (10) are disposed in the region of the vessel wall (11) by which the aeration tube(s) (2) is/are lowered into the liquid vessel or can be removed from the liquid vessel.

19. Device according to one of the preceding Claims 10 to 18, characterised in that the aeration tube(s) (2) is/are disposed between vertically disposed guide rods (40) which run parallel to the aeration tube(s) (2), and that attachment rods (42) are disposed above the guide rods (40) and run transversely to the guide rods (40), which attachment rods, together with the guide rods (40) form a channel/channels for receiving the aeration tube(s) (2), and that the guide rods (40) and the attachment rods (42) form the lower part of a container (70) which is laterally closed by container walls (72) and in which is disposed packing (44) designed as static mixers.

20. Device according to Claim 19, characterised in that the aeration tube(s) (2) has/have at least so many perforations that at least one perforation is provided under each opening which is formed by the static mixer in the vertical direction.

21. Device according to one of the preceding Claims 10 to 20, characterised in that a swivel means (14) is disposed between the elastic membrane (2) or the aeration tube(s) (2) respectively and the holding device (12, 14, 16, 18, 20).

22. Device according to Claim 19, characterised in that screens, perforated plates (71) or the like are disposed above the aeration tube(s) (2) and above the packing (44).

23. Device according to Claim 19, characterised in that the container walls (72) consist of screens, perforated plates or the like at least in the vicinity, of the base (52) of the tank or of the level of the liquid.

24. Device according to Claim 19, characterised in that loose fillers such as sand, activated carbon, pumice stone, plastic, granules or the like are provided in the packing (44).

25. Device according to Claim 24, characterised in that the fillers are disposed one above the other in such a manner that the bands or channels forming the fillers have different directions one above the other, in such a manner that the lower edges of the bands of a filler layer form angles with the upper edges of the underlying filler bands, with the channels of a lower filler layer, viewed vertically, being intersected by the edges of the bands of the overlying filler layer.

*FIG. 1*

*FIG. 2*

1

FIG. 3A

FIG. 3 B

FIG. 4

A   B   C

FIG4 D   FIG4 E

FIG. 4F

FIG. 4G

FIG. 4H

FIG. 4I

FIG. 4K

FIG. 4L

FIG. 4M

FIG. 4N

FIG. 4-O

## FIG. 5

FIG. 6 A

FIG. 6 B

FIG. 6 C

FIG. 6 D

FIG. 6 E

FIG. 6 F

FIG. 6 G

FIG. 6 H

FIG. 6 I

FIG. 6 K

FIG. 7

EP 0 209 474 B1

_FIG. 8_